# FASCICULE DE BREVET EUROPEEN

(11) **EP 1 201 391 B1**
(45) Date de publication et mention de la délivrance du brevet: **09.07.2008**
(21) Numéro de dépôt: 01420214.7
(22) Date de dépôt: 25.10.2001
(51) Int. Cl.: B29B 17/00

(54) **Procédé pour le traitement et la récupération de déchets de matières synthétiques**
Verfahren zur Aufbereitung und Wiedergewinnung von Kunststoffabfällen
Method of treating and recovering synthetic material waste

(30) Priorité: 25.10.2000 FR 0013698
(43) Date de publication de la demande: 02.05.2002
(73) Titulaire: BMV SARL, 75014 Paris (FR)
(72) Inventeur: Adelhanoff, M. Yves, 69300 Caluire (FR)
(74) Mandataire: Prugneau, Philippe

(56) Documents cités:
- EP-A- 0 533 304
- EP-A- 0 794 216
- WO-A-99/52696
- US-A- 5 824 745

## Description

La présente invention concerne un procédé pour le traitement et la récupération de déchets de matières synthétiques, en particulier de polyoléfines telles que polyéthylène et/ou polypropylène, en vue de leur réutilisation. Ce procédé permet la réutilisation de déchets industriels actuellement produits en quantités importantes, tels que ceux résultant de la fabrication des couches-culottes, déchets qui se présentent sous la forme de feuille bi-composants (polyéthylène et polypropylène).

Dans le domaine de la récupération et du recyclage des déchets de ce genre, la tendance habituelle est de réutiliser ces déchets pratiquement à l'état pur, sans mélange à d'autres matières. Or l'utilisation de déchets directement comme "matière première", notamment sur une presse à injecter, est impossible ou du moins ne conduit pas à des résultats satisfaisants, dans le cas de déchets de matières oléfiniques du genre indiqué ci-dessus.

En particulier, si l'on ne se contente d'agglomérer ou compacter de tels déchets, les agglomérats obtenus sont insuffisamment plastifiés et ne sont pas directement réutilisables, ou du moins ne permettent pas l'obtention, par injection, de produits de qualité satisfaisante sur le plan mécanique.

A l'opposé, il existe aussi des procédés de recyclage des déchets de matières plastiques, qui restent des solutions complexes et coûteuses. De tels procédés sont par exemple connus des documents de brevet US 5 824 745, EP 0 533 304 et EP 0 794 216.

Le document de brevet US 5 824 745, correspondant au préambule de la revendication 1, divulgue par exemple un procédé pour le traitement et la récupération de déchets en polymères thermoplastiques, notamment en polyéthylène et en polypropylène. Les déchets sont broyés et déchiquetés puis agglomérés et injectés dans une extrudeuse pour produire des boulettes à introduire dans une presse à injecter. Les déchets sont en outre mélangés à des plastifiants et/ou charges élastomériques avant ou après l'agglomération.

On connaît également des procédés plus économiques pour le traitement et la récupération de déchets de matières synthétiques, en vue de leur réutilisation, consistant :
- partant des déchets, à les déchiqueter et/ou les broyer,
- à agglomérer les déchets broyés ou déchiquetés ;
- à mélanger ces déchets, avant ou pendant ou après leur agglomération, avec un plastifiant et/ou une charge élastomérique, et
- à utiliser le mélange ainsi obtenu comme matière transformable sur une presse à injecter.

Selon un premier mode de mise en oeuvre, les opérations de déchiquetage et/ou broyage des déchets, et d'agglomération des déchets broyés ou déchiquetés, précèdent l'opération de mélange des déchets agglomérés avec le plastifiant et/ou la charge élastomérique, avant introduction de ce mélange dans la presse à injecter.

Dans le détail, ce premier mode de mise en oeuvre consiste, après avoir transformé les déchets en petites particules ou granulés ou paillettes, à faire passer ces derniers dans un système d'agglomération. L'opération d'agglomération consiste elle-même à comprimer la matière et à l'échauffer, la compression pouvant se faire soit par un mouvement circulaire d'un rotor autour d'une grille cylindrique, soit par un mouvement vertical d'une masse en appui sur une grille. La température de la matière étant élevée jusqu'à une valeur restant inférieure à la température de plastification, le passage de cette matière au travers de la grille permet d'obtenir des granulés "agglomérés" suffisamment denses pour pouvoir être, ensuite, transportés notamment par dépression vers une presse à injecter les thermoplastiques.

Au pied de cette presse, avant introduction de ces déchets dans la presse, ceux-ci sont mélangés avec le plastifiant et/ou la charge élastomérique. Le plastifiant est un solvant lourd qui, incorporé aux polymères des déchets utilisés, détruit partiellement les interactions entre chaînes moléculaires, responsables de la cohésion mécanique, et transforme ainsi un matériau initialement rigide en matériau plus souple ou flexible. Quant à la charge élastomérique, éventuellement ajoutée, celle-ci peut être du genre SBS (copolymère bloc styrène butadiène), SEBS (copolymère éthylène bloc styrène butadiène) ou charge élastomérique directement réticulée.

On connait aussi selon un deuxième mode de mise en oeuvre, à la suite de l'opération de déchiquetage et/ou broyage des déchets, le procédé comprend une opération d'agglomération des déchets broyés ou déchiquetés, au cours de laquelle sont ajoutés le plastifiant et/ou la charge élastomérique, pour obtenir un mélange aggloméré, prêt à être introduit dans la presse à injecter. L'opération de mélange est ainsi simultanée, et non plus consécutive, à l'opération d'agglomération, les différentes adjuvants (à savoir le plastifiant et/ou la charge élastomérique) étant ajoutés lors du passage dans le système d'agglomération.

Les deux premiers modes de mise en oeuvre, précédemment décrits, permettent d'obtenir à partir de déchets de matières synthétiques, et d'une manière particulièrement économique, des granulés finalement transformables sur des presses à injecter. En effet, ces modes de mise en oeuvre nécessitent seulement des machines d'agglomération, dont les coûts d'investissement et d'exploitation restent relativement limités, tout en permettant d'obtenir des granulés ou autres particules analogues de matière non plastifiées, de qualité suffisante pour pouvoir être retransformées sur une presse à injecter de type courant.

La présente invention vise à améliorer l'incorporation des adjuvants pour obtenir un mélange final plus homogène et de meilleure qualité et à permettre par un traitement relativement simple et économique, mais adapté, de récupérer les déchets du type ici concerné, en les transformant en un produit directement utilisable sur une presse à injecter les matières thermoplastiques, dans un processus de production par injection.

A cet effet, l'invention a essentiellement pour objet un procédé pour le traitement et la récupération de déchets de matières synthétiques, du genre mentionné ci-dessus, en vue de leur réutilisation, ce procédé consistant :
- partant des déchets, à les déchiqueter et/ou les broyer,
- à agglomérer les déchets broyés ou déchiquetés ;
- à mélanger ces déchets, avant ou pendant ou après leur agglomération, avec un plastifiant et/ou une charge élastomérique, et
- à utiliser le mélange ainsi obtenu comme matière transformable sur une presse à injecter,
caractérisé en ce qu'il comprend, à la suite de l'opération de déchiquetage et/ou broyage des déchets, une opération de mélange de ces déchets broyés ou déchiquetés, avec le plastifiant et/ou la charge élastomérique, par "compoundage" fournissant un mélange fluidifié, lequel est ensuite refroidi puis divisé en granulés ou particules analogues, prêts à être introduits dans la presse à injecter, l'opération de compoundage étant réalisée sur une ligne d'extrusion à simple ou double vis, comprenant différentes trémies recevant, d'une part les déchets précédemment broyés et/ou déchiquetés, et d'autre part, le plastifiant et/ou la charge élastomérique, le mélange fluidifié obtenu passant par une filière produisant des fils ou joncs continus, ensuite refroidis et tronçonnés pour obtenir des granulés directement utilisables sur une presse à injecter.

Ce mode de mise en oeuvre assure ainsi l'incorporation des adjuvants par une opération dite de "compoundage", réalisable sur une ligne d'extrusion à simple ou double vis, de structure classique, comprenant différentes trémies recevant :
- d'une part, les déchets précédemment broyés et/ou déchiquetés ;
- d'autre part, les adjuvants à savoir plastifiant et/ou charge élastomérique,
en respectant les proportions prédéfinies pour les composants du mélange à obtenir. Tous ces composants sont entraînés en avant par la vis, ou les deux vis de l'extrudeuse, et sont alors mélangés entre eux et fondus. Le mélange fluidifié obtenu passe par une filière, en sortie de l'extrudeuse, ce qui produit des fils ou joncs continus qui sont ensuite refroidis, puis tronçonnés pour obtenir des granulés, directement utilisables sur une presse à injecter.

Ainsi, l'idée inventive consiste à mélanger des déchets agglomérés avec un plastifiant et/ou une charge élastomérique, représentant de préférence 5 à 10% de la masse totale du mélange, avant de réintégrer ces déchets dans un processus d'injection permettant la fabrication de nouveaux produits industriels, qui possèderont des propriétés mécaniques et thermiques convenables, notamment une bonne tenue aux chocs et au froid, ces produits étant par exemple des palettes de manutention en matière plastique (telles que celles faisant l'objet de la précédente demande de brevet français N° 00.12223 du 26 Septembre 2000 au nom du Demandeur). Les déchets industriels, qui constituent le point de départ du procédé selon la présente invention, peuvent être agglomérés et éventuellement réutilisés sur le lieu même où ils sont produits, ce procédé assurant une valorisation économique desdits déchets.

Le procédé selon l'invention permet d'obtenir un mélange final plus homogène et de meilleure qualité pour sa transformation sur la presse à injecter, par rapport aux procédés présentés précédemment.

Dans tous les cas les déchets peuvent être traités tels qu'ils se présentent, ou être, au contraire, préalablement compactés, l'opération de compactage, donc de réduction de volume des déchets, étant effectuée avant leur déchiquetage ou broyage.

Comme il va de soi, l'invention ne se limite pas au seul mode de mise en oeuvre de ce procédé pour le traitement et la récupération de déchets de matières synthétiques qui a été décrit ci-dessus, à titre d'exemple ; elle en embrasse, au contraire, toutes les variantes respectant le même principe, quels que soient notamment :
- la nature des déchets à traiter ;
- l'ordre des opérations effectuées ;
- la nature des adjuvants (plastifiants, charges élastomériques) et leurs proportions dans le mélange final ;
- les types de matériels utilisés pour les opérations, telles que broyage, déchiquetage, agglomération, mélange ;
- la nature des produits moulés par injection, à partir des déchets traités.

## Revendications

1. Procédé pour le traitement et la récupération de déchets de matières synthétiques, en particulier de polyoléfines telles que polyéthylène et/ou polypropylène, en vue de leur réutilisation, consistant :
- partant des déchets, à les déchiqueter et/ou les broyer,
- à agglomérer les déchets broyés ou déchiquetés ;
- à mélanger ces déchets, avant ou pendant ou après leur agglomération, avec un plastifiant et/ou une charge élastomérique, et
- à utiliser le mélange ainsi obtenu comme matière transformable sur une presse à injecter,
**caractérisé en ce qu'**il comprend, à la suite de l'opération de déchiquetage et/ou broyage des déchets, une opération de mélange de ces déchets broyés ou déchiquetés, avec le plastifiant et/ou la charge élastomérique, par "compoundage" fournissant un mélange fluidifié, lequel est ensuite refroidi puis divisé en granulés ou particules analogues, prêts à être introduits dans la presse à injecter, l'opération de compoundage étant réalisée sur une ligne d'extrusion à simple ou double vis, comprenant différentes trémies recevant, d'une part, les déchets précédemment broyés et/ou déchiquetés, et d'autre part, le plastifiant et/ou la charge élastomérique, le mélange fluidifié obtenu passant par une filière produisant des fils ou joncs continus, ensuite refroidis et tronçonnés pour obtenir des granulés directement utilisables sur une presse à injecter.

2. Procédé selon la revendication 1, **caractérisé en ce que** les déchets sont mélangés avec un plastifiant et/ou une charge élastomérique représentant 5 à 10% de la masse du mélange

## Claims

1. Method for treating and recovering of synthetic material wastes, particularly polyolefins such as polyethylene and / or polypropylene, for reuse, consisting of:
- starting with wastes, shredding and / or grinding them,
- agglomerating shredded or grinded wastes;
- mixing wastes, before or during or after agglomeration thereof, with a plasticizer and / or elastomeric feed, and
- using the obtained mixture as a transformable material on an injection machine,
**characterized in that** it comprises, after the wastes shredding and / or grinding operation, a mixing operation of these shredded or grinded wastes, with the plasticizer and / or elastomeric feed, by "compounding" operation providing a fluidized mixture, which is then cooled and then divided into pellets or similar particles, ready to be introduced in the injection machine, compounding operation being carried out on a single or twin screw extrusion line, including various hopper receiving, on the one hand, previously shredded and / or grinded wastes, and on the other hand, the plasticizer and / or elastomeric feed, the obtained fluidized mixture via a die producing continuous yarn or extruded string, then cooled and cross-cut to obtain pellets directly usable on an injection machine.

2. Method according to claim 1, **characterized in that** wastes are mixed with plasticizer and / or elastomeric feed representing 5 to 10% in mass of the mixture.

## Patentansprüche

1. Verfahren für die Behandlung und die Wiedergewinnung von Abfällen aus Kunststoffen, insbesondere von Polyolefinen, wie Polyäthylen und/oder Polypropylen, im Hinblick auf ihre Wiederverwertung, bestehend aus:
- ausgehend von Abfällen, sie zu zerkleinern und/oder sie zu mahlen,
- die gemahlten oder zerkleinerten Abfälle zu verdichten;
- diese Abfälle vor oder während oder nach ihrer Verdichtung mit einem Plastifikator und/oder einer elastomeren Charge zu mischen und
- die so als umwandelbares Material erhaltene Mischung auf einer Spritzgussmaschine zu verwenden, **dadurch gekennzeichnet, dass** es nach dem Arbeitsvorgang des Zerkleinern und/oder des Mahlens der Abfälle einen Arbeitsvorgang des Vermischens dieser gemahlenen oder zerkleinerten Abfälle mit dem Plastifikator und/oder der elastomeren Charge umfasst, der durch "Kompoundierung" eine verflüssigte Mischung liefert, welche anschließend gekühlt wird, dann in Granulate oder in ähnliche Partikel geteilt wird, bereit, um in die Spritzgussmaschine eingefüllt zu werden, wobei der Arbeitsvorgang der Kompoundierung in einer Extrusionslinie mit einfacher oder doppelter Schnecke durchgeführt wird, die verschiedene Trichter umfasst, die einerseits die vorhergehend gemahlenen und/oder zerkleinerten Abfälle und andererseits den Plastifikator und/oder die elastomere Charge aufnehmen, die verflüssigte Mischung durch Durchlaufen durch eine Düse, die Fäden oder Endlosstäbe produziert, erhalten wird, dann abgekühlt und in Stücke geteilt wird, um Granulate zu erhalten, die direkt auf einer Spritzgussmaschine verwendet werden können.

2. Verfahren gemäß Anspruch 1, **dadurch gekennzeichnet, dass** die Abfälle mit einem Plastifikator und/oder einer elastomeren Charge vermischt werden, die 5 bis 10 % der Mischungsmasse darstellen.
